# EUROPÄISCHE PATENTSCHRIFT

(11) **EP 3 618 984 B1**
(45) Veröffentlichungstag und Bekanntmachung des Hinweises auf die Patenterteilung: **24.12.2025**
(21) Anmeldenummer: 18721787.2
(22) Anmeldetag: 02.05.2018
(51) Int. Cl.: B21D 53/26, F16F 15/30, B21D 35/00, F02N 11/08

(54) **VERFAHREN ZUR HERSTELLUNG EINES SCHWUNGRADS**
METHOD FOR PRODUCING A FLYWHEEL
PROCÉDÉ DE FABRICATION D'UN VOLANT D'INERTIE

(30) Priorität: 05.05.2017 DE 102017109726
(43) Veröffentlichungstag der Anmeldung: 11.03.2020
(73) Patentinhaber: Mühlhoff Umformtechnik GmbH, 47589 Uedem (DE)
(72) Erfinder: HINCKERS, Hubert, 47574 Goch (DE)
(74) Vertreter: Hoffmann Eitle
(86) Internationale Anmeldenummer: PCT/EP2018/061204
(87) Internationale Veröffentlichungsnummer: WO 2018/202710

(56) Entgegenhaltungen:
- EP-A1- 0 251 243
- DE-A1- 102012 100 278
- DE-A1- 102014 111 581
- DE-U1- 8 501 367
- JP-A- S6 156 743
- US-A1- 2013 193 802

## Beschreibung

Die vorliegende Erfindung betrifft ein Verfahren zur Herstellung eines Schwungrads, bei dem man ein Dämpfungsblechteil herstellt, indem man wenigstens ein erstes für das Schwungrad vorgesehenes metallisches Blechelement mit wenigstens einer zweiten parallelen Blechlage aufeinanderliegend durch einen Fügevorgang zu einer scheibenförmigen baulichen Einheit verbindet.

Schwungräder im Sinne der vorliegenden Erfindung sind insbesondere Schwungräder für Fahrzeuge wie PKWs und LKWs und zwar sowohl so genannte Automatik-Schwungräder als auch manuelle Schwungräder (Zweimassenschwungräder), wie sie beispielsweise in der Start/Stopp-Automatik von Kraftfahrzeugen verwendet werden, aber auch bei Fahrzeugen ohne Start-Stopp-Automatik verwendete Schwungräder, also Standard-Schwungräder oder auch Schwungräder für jegliche andere Getriebevarianten.

Nachteilig bei den bekannten Schwungrädern sind die störenden Geräusche im Fahrbetrieb.

In der DE 602 19 270 T2 ist ein schalldämpfendes Anlassschwungrad beschrieben, bei dem zwischen der am äußeren Umfangsendabschnitt eines Trägers liegenden radialen Fläche und der am inneren Umfangsendabschnitt eines Zahnkranzes liegenden radialen Gegenfläche ein Element aus einem viskoelastischen Material angeordnet ist, welches in radialer und in axialer Richtung unter Druckspannung gesetzt wird. Bei diesem Element handelt es sich um eine Ringdichtung, die in eine Nut des Trägers eingedrückt und dadurch unter Spannung gesetzt wird.

Die DE 600 08 991 T2 beschreibt ein Schwungrad eines Verbrennungsmotors mit Anlasszahnkranz. Um den Lärmpegel beim Anlassen zu senken, wird hier zwischen einer Umfangsfläche eines Trägers des Schwungrads und einer komplementären Umfangsfläche eines auf dem Schwungrad befestigten Zahnkranzes ein Ring aus einem verformbaren elastomeren Material durch Kleben angebracht. Zusätzlich kann eine Auskleidung aus Elastomer oder Plastomer auf einer radialen Oberfläche zwischen Träger und Zahnkranz befestigt werden, welche etwa rechtwinklig zu der Umfangsfläche verläuft, um auf diese Weise einen Gleitkontakt zwischen dem Träger und dem Zahnkranz zu erlauben. Die Geräuschminderung soll somit hier erzielt werden, indem man eine Verformung des Zahnkranzes radial zur Welle des Schwungrads zulässt.

In der DE 10 2011 001 881 A1 ist ein Verfahren zur Herstellung eines Schwungrads mit den Merkmalen der eingangs genannten Gattung beschrieben, bei dem man ein Dämpfungsblechteil aus einem Verbundwerkstoff umfassend eine Schicht aus Stahlblech und eine viskoelastische Dämmschicht in einem Fügeprozess unter Druck und teilweiser Umformung mit einem als Schwungrad vorgesehenen metallischen Basiselement dauerhaft fest zu einem Sandwichbauteil verbindet. Alternativ kann auch eine Dämmschicht und /oder ein Klebstoff mit ähnlicher Materialeigenschaft eingesetzt werden. Hier wird das Bauteil für das Schwungrad aus mehreren Schichten in Sandwichbauweise aufgebaut, von denen mindestens eine Schicht, vorzugsweise eine innenliegende Schicht, eine viskoelastische Dämmschicht ist. Das Dämpfungsblechteil aus dem Verbundwerkstoff Stahl/Dämmschicht muss bei diesem bekannten Verfahren gesondert hergestellt werden. Erfahrungen mit diesem bekannten Verfahren haben gezeigt, dass es in nachteiliger Weise zu Verklebungen bei den Werkzeugen durch das Material der viskoelastischen Dämmschicht kommt. Die Umform- und Verbindungswerkzeuge müssen in so einem Fall gereinigt werden, wodurch zusätzlicher Aufwand entsteht und es zu Verzögerungen im Herstellungsprozess kommt.

Weiterhin haben Versuche mit den aus der DE 10 2011 001 881 A1 bekannten Sandwichbauteilen ergeben, dass über das Dämpfungsblechteil mit der viskoelastischen Dämmschicht keine Kräfte übertragen werden. Zudem wurde die Steifigkeit des Sandwichbauteils in nachteiliger Weise erhöht.

In der DE 10 2014 111 581 A1 wird ein Verfahren zur Herstellung eines Schwungrads mit den Merkmalen der eingangs genannten Gattung beschrieben, bei dem man das erste Blechelement mit wenigstens einer zweiten parallelen Blechlage aufeinanderliegend ohne zwischenliegende viskoelastische Schicht durch einen Fügevorgang zu einer scheibenförmigen baulichen Einheit verbindet.

DE 85 01 367 U1, auf welcher der Oberbegriff des Patentanspruchs 1 basiert, beschreibt ein Schwungrad für Schaltgetriebe mit einteilig aus kaltverformtem Blech hergestellter Schwungrad-Scheibe mit Außenverzahnung, wobei zur Klangreduzierung ein die Befestigungsnabe des Schwungrades umgebender Ring einseitig mit der Schwungrad-Scheibe verbunden ist.

DE 10 2012 100 278 A1 offenbart ein rotationssymmetrisches Bauteil aus Stahlblech, welches durch Umformung hergestellt ist, wobei das Stahlblech aus zwei unlösbar miteinander verbundenen Stahllagen gebildet ist, wobei die beiden Stahllagen eine unterschiedliche Festigkeit aufweisen.

US 2013/193 802 A1 offenbart ein Druckbearbeitungsverfahren zur Bearbeitung zylindrischer Teile mit den Schritten Verbinden von mindestens zwei Blechen aus Metallplatten durch Zusammenbringen der Blechoberflächen der Metallplatten; Drehen der Metallplatten unter Verwendung einer rotierenden Welle, die senkrecht zu den Blechoberflächen der Metallplatten angeordnet ist; Aufbringen einer Trenn- und Verformungskraft an einer Kopplungsposition auf einen Umfang der mindestens zwei Bleche der Metallplatten, um die Metallplatten zu trennen und zu verformen, während sich die mindestens zwei Bleche der Metallplatten drehen; und Aufbringen einer zylinderformenden Kraft auf mindestens eine der Metallplatten, um einen Zylinder entlang der rotierenden Welle zu formen.

EP 0 251 243 A1 beschreibt ein einteiliges Schwungrad mit am äußeren Umfang abgewinkelt angeordnetem spanlos angeformtem Zahnkranz, wobei auf einer Seitenfläche des Rades eine gegenüber dem Radquerschnitt dünne Scheibe aufgebracht ist, welche sich am äußeren Umfang der abgewinkelten Formgebung anpasst und an den in den Fußkreis der Verzahnung mündenden Zahnflanken anliegt.

JP S61 56743 A offenbart die Herstellung einer leichten, robusten und präzisen V-Riemenscheibe durch Pressformen von Flanschteilen an einer Umfangswand und Aufrollen einer Poly-V-Nut auf einer Umfangswand zweier aufeinandergepresster Metallscheiben.

Ausgehend von dem zuvor genannten Stand der Technik besteht die Aufgabe der vorliegenden Erfindung darin, ein alternatives Verfahren zur Herstellung eines Schwungrads zur Verfügung zu stellen, welches zu einem Schwungrad mit vibrationsdämmenden und geräuschdämmenden Eigenschaften führt und die genannten Nachteile vermeidet. Aufgabe der vorliegenden Erfindung ist es weiterhin, ein Schwungrad mit weiter verbesserten Eigenschaften zur Verfügung zu stellen.

Die Lösung dieser Aufgabe liefert ein Verfahren zur Herstellung eines Schwungrads der eingangs genannten Gattung mit den kennzeichnenden Merkmalen des Hauptanspruchs bzw. ein Schwungrad mit den Merkmalen des Anspruchs 13.

Erfindungsgemäß ist vorgesehen, dass man wenigstens zwei Blechlagen aus unterschiedlichen Werkstoffen und unterschiedlichen Materialstärken miteinander verbindet.

Gemäß der Erfindung weist die erste Blechlage eine größere Blechstärke auf, so dass diese erste Blechlage den größeren Anteil der Drehmomentbelastung beim Motorstart und im Fährbetrieb aufnehmen kann. Die zweite Blechlage dient hier zur Ergänzung der Drehmomentaufnahme und wird in einer dünneren Blechstärke konstruiert.

Die dünnere zweite Blechlage hat den Effekt, das Geräuschverhalten zu dämpfen und erzeugt ein größeres flexibles Verhalten des Schwungrades im Fahrbetrieb. Es weist somit, wenn zwei Blechlagen gemäß der Erfindung verwendet werden, die erste Blechlage eine größere Blechstärke auf als die zweite Blechlage.

Weiterhin ist es gemäß der Erfindung so, dass bei zwei Blechlagen die erste Blechlage aus einem weicheren Stahlwerkstoff besteht als die zweite Blechlage. Beispielsweise kann es bei Verwendung von zwei Blechlagen mit unterschiedlicher Materialstärke gemäß der Erfindung so sein, dass die erste Blechlage eine Blechstärke von mehr als 1 mm aufweist, vorzugsweise eine Blechstärke von mehr als 1,5 mm und dass die zweite Blechlage eine Blechstärke von weniger als 1 mm aufweist.

Es wurde bereits erwähnt, dass das erste Blech aus einem weicheren Stahlwerkstoff besteht als das zweite Blech. Beispielsweise kann hier die erste Blechlage aus einem thermomechanisch gewalzten kohlenstoffarmen hochfesten und zum Kaltumformen geeigneten Stahlwerkstoff mit einer Mindeststreckgrenze von 355 N/mm² bestehen, während die zweite Blechlage aus einem thermomechanisch gewalzten kohlenstoffarmen hochfesten und zum Kaltumformen geeigneten Stahlwerkstoff mit einer Mindeststreckgrenze von 700 N/mm² besteht.

Im vorliegenden Verfahren können mehr als zwei Blechlagen miteinander gefügt werden. Beispielsweise kann in diesem Fall eine Mehrzahl von Blechlagen umfassend jeweils Blechlagenpaarungen aus jeweils zwei Blechlagen mit unterschiedlicher Materialstärke und/oder jeweils unterschiedlichen Stahlwerkstoffen miteinander gefügt werden.

Im Rahmen des erfindungsgemäßen Verfahrens werden wenigstens zwei Blechlagen mit zumindest im Ausgangszustand vor dem Fügevorgang unterschiedlichen Umformkonturen miteinander verbunden.

Das Konzept der vorliegenden Erfindung ermöglicht eine große Varianz für die Fertigung von Schwungrädern. So ist es beispielsweise möglich, nach diesem Konzept ein Schwungrad mit einer Vielzahl aufeinander liegenden Blechen je nach Belastungsfall und Flexibilität herzustellen. Durch unterschiedliche Blechstärkenpaarungen und auch unterschiedliche Werkstoffgüten lassen sich Schwungräder für hohe und niedrigere Belastungen konstruieren.

Das außerordentlich hohe flexible Verhalten der Schwungräder gemäß diesem Konzept ermöglicht einen geringen axialen Druck auf die Motorlagerung bei gleichzeitig großer Drehmomentübertragung des Antriebsstrangs. Ein zusätzlicher Vorteil ist die bereits oben erwähnte geringe Geräuschentwicklung.

Schwungräder, die nach dem erfindungsgemäßen Verfahren hergestellt sind, haben eine Reihe von Vorteilen. Sie weisen eine hohe Flexibilität auf für den Toleranz-/Bewegungsausgleich bei jeder Motorumdrehung. Sie haben ein geringes Eigengewicht, insbesondere da man einzelne Bleche mit unterschiedlichen (teils geringeren) Außendurchmessern verwenden kann.

Der Verfahrensschritt bei der Herstellung von Schwungrädern in dem die Verbindung von zwei oder mehr Blechlagen vorgesehen ist, kann in einem automatischen Transferarbeitsgang erfolgen.

Es wird die Möglichkeit zur Herstellung von Schwungrädern mit einer maximierten Drehmomentübertragung geschaffen durch variableren Einsatz von Blechstärken und Materialgüten. Man kann so eine genaue individuelle Gestaltung eines Schwungrades gemäß einem definierten Anforderungsprofil erreichen.

Die erfindungsgemäßen Schwungräder haben eine sehr hohe Schalldämpfung. Sie weisen eine geringere axiale Steifigkeit auf im Vergleich mit Schwungrädern, die aus einem Monoblech bestehen.

Gemäß der vorliegenden Erfindung wird das scheibenförmige Sandwichbauteil der Mitnehmerscheibe eines Schwungrads aus zwei oder mehreren Blechlagen ohne Zwischenschaltung eines viskoelastischen Materials gefügt, d.h. es wird ein Doppelblech oder Mehrfachblech hergestellt. Dieses Doppelblechprinzip bedeutet, dass nunmehr die Kraftübertragung von der Kurbelwelle zum Wandler nicht wie bisher von nur einem, sondern von zwei oder mehreren aufeinander liegenden Blechlagen mit unterschiedlichen Werkstoffen und/oder unterschiedlichen Materialstärken übertragen wird.

Durch die Herstellung derartiger Mitnehmerscheiben nach dem Doppelblechprinzip ergeben sich zum einen Vorteile im Bereich der Akustik. Aufgrund der Minderbelastung der angrenzenden Bauteile werden störende Resonanzgeräusche minimiert. Dazu erreicht man durch den zwei- oder mehrschichtigen Aufbau eine gute Klangdämpfung. Geräusche, die bei einem Schwungrad durch das einfahrende Starterritzel entstehen, werden deutlich abgeschwächt und sind nur noch dumpf wahrnehmbar. Dies ist insbesondere vorteilhaft bei einem Schwungrad für ein modernes Start-Stopp-System.

Bei der Herstellung des Schwungrads ergeben sich weiterhin wirtschaftliche Vorteile. Das bisher benötigte Klangdämpfungsblech mit viskoelastischer Schicht wird eingespart. Bei dem eingangs erwähnten bekannten Verfahren musste ein solches Klangdämpfungsblech in einem gesonderten Arbeitsgang hergestellt und mit dem Blechteil der Mitnehmerscheibe zusammengefügt werden. Das erfindungsgemäße Verfahren reduziert die Zahl der notwendigen Arbeitsgänge und ist daher kostengünstiger.

Weiterhin ist es von Vorteil, dass bei der erfindungsgemäßen Lösung die Belastung anderer Motorkomponenten gesenkt wird. Durch das Doppelblechprinzip wird bei gleicher Kraftübertragung eine höhere axiale und radiale Flexibilität erreicht. Diese führt durch die erreichte deutlich geringere Steifigkeit zu einer Minderbelastung der Lager in Getriebe und Motor. Auch wird durch das Einsparen das des bisher verwendeten Klangdämpfungsblechs mit viskoelastischer Schicht das Gesamtgewicht der Mitnehmerscheibe verringert. Das dadurch resultierende geringere Massenträgheitsmoment entlastet die angrenzenden Bauteile, die wiederum kleiner dimensioniert werden können.

Die Dämpfung erfolgt erfindungsgemäß anders als bei früheren Lösungen nicht mehr zwischen Träger und Zahnkranz des Schwungrads, sondern quasi im Trägerbauteil (entspricht nun dem sandwichartigen Dämpfungsblechteil) des Schwungrads selbst und dabei vollflächig, so dass das Trägerbauteil im wesentlichen über seine gesamte Flächenerstreckung schwingungs- und geräuschdämpfend ausgebildet ist. Beim Fügevorgang werden zwei oder mehrere im Prinzip runde Blechelemente mit scheibenförmiger Grundform in Richtung Ihrer Achse so gefügt, dass sie anschließend einen mehrschichtigen Verbund bilden, wobei sie sich mit ihren einander zugewandten Oberflächen miteinander verbinden. Die miteinander zu verbindenden Blechlagen haben jeweils etwa eine ähnliche scheibenartige geometrische Grundform im Umriss, können aber in Details voneinander abweichen. Sie können außerdem zusätzlich auch jeweils einander entsprechende oder auch unterschiedliche Verformungen senkrecht zur Ebene der Scheibenform aufweisen.

Vorzugsweise geht man so vor, dass man das Sandwichbauteil umfassend das erste Blechelement, die zweite Blechlage sowie gegebenenfalls weitere Blechlagen mindestens teilweise aus der Hauptebene des scheibenförmigen Sandwichbauteils heraus entsprechend der Form des Schwungrads verformt sowie an diesem gegebenenfalls Lochungen oder Ausstanzungen vornimmt. Die beiden Blechlagen können unter Druck zu einem Bauteil gefügt werden. Die gesamte Anordnung wird in der Regel bei diesem Fügevorgang so verpresst, dass sich die Ausgangslagen dauerhaft fest miteinander verbinden.

Der Fügevorgang der Blechlagen kann auch beispielsweise eine zusätzliche gegenseitige Fixierung der Blechlagen in radialer Richtung durch Einclipsen umfassen.

Es kann bei einer möglichen Variante der Erfindung vorgesehen sein, dass beispielsweise nur eine Blechlage des scheibenförmigen Sandwichbauteils in einem radial äußeren Randbereich eine Aufkantung oder Umbiegung erhält, die die zweite oder weitere Blechlagen nicht aufweisen.

Gemäß einer bevorzugten Variante der Erfindung weisen die aufeinanderliegenden Blechlagen des scheibenförmigen Sandwichbauteils keine gegenseitige Fixierung aneinander auf, so dass in radialer Richtung und/oder in axialer Richtung im Mikrobereich relative Lageänderungen der Blechlagen zueinander möglich sind.

Die Grundform des Schwungrads bzw. der Mitnehmerscheibe des Schwungrads kann beispielsweise von einer ersten Blechlage des Sandwichbauteils vorgegeben werden und bei dem Fügeprozess schmiegen sich quasi die zweite oder weitere Blechlagen formschlüssig an diese Grundform an, so dass danach ein Schwungrad in der gewünschten Form mit einem mindestens zweischichtigen Aufbau erhalten wird.

Ebenfalls vorteilhaft kann es sein, wenn der Fügevorgang der Blechlagen eine zusätzliche Fixierung beider Bauteile durch Haltelaschen umfasst.

Im Rahmen der vorliegenden Erfindung kommen grundsätzlich die verschiedensten Werkstoffpaarungen in Betracht. Vorzugsweise bestehen die Blechlagen des Sandwichbauteils aus einem unlegierten kaltumformbaren Stahlblech.

Das Fügen der Blechlagen geschieht bevorzugt unter einer Presse, wobei der beim Fügevorgang auszuübende Druck naturgemäß von der Werkstoffpaarung abhängt, sowie auch von der Materialstärke der verwendeten Blechlagen. Der dabei auf die zu verbindenden Blechlagen angewandte Anpressdruck kann somit über weite Bereiche variieren und beispielsweise im Bereich von einem oder mehreren bar liegen oder auch wesentlich höher sein.

Nach dem Fügevorgang schließen sich in der Regel weitere Arbeitsgänge an, beispielsweise Umform- und Beschneideoperationen, wobei derartige Verfahrensgänge natürlich auch vor dem Fügevorgang stattfinden können. In der Regel wird zudem nach dem Fügeprozess an dem Schwungrad ein äußerer Zahnkranz angebracht. Weitere Bauelemente des Schwungrads können beispielsweise angenietet, geschweißt oder angeschraubt werden.

Gegenstand der vorliegenden Erfindung ist weiterhin ein für einen Anlasser eines Kraftfahrzeugs vorgesehenes Schwungrad, welches nach einem Verfahren wie es zuvor beschrieben wurde hergestellt ist. Ein solches Schwungrad kann in einem Kraftfahrzeug beispielsweise im Bereich einer Start/Stopp-Einrichtung eingesetzt werden. Durch die erfindungsgemäße Geräuschdämpfung werden in vorteilhafter Weise die beim Anlassen entstehenden störenden Geräusche stark reduziert, was insbesondere bei Kraftfahrzeugen mit diesen Einrichtungen vorteilhaft ist, da bei diesen Anlassvorgänge erheblich häufiger vorkommen als bei konventionellen Fahrzeugen. Jedoch ist der Einsatz der erfindungsgemäßen Schwungräder ebenso bei Kraftfahrzeugen mit herkömmlichen Anlassern sinnvoll.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine Ansicht eines scheibenförmigen Ausgangsblechs, von dem bei der Herstellung des Schwungrads ausgegangen wird;
Figur 2 eine Ansicht eines beispielhaften erfindungsgemäßen Doppelblechs für ein Schwungrad;
Figur 3 eine schematisch vereinfachte Schnittansicht durch das erfindungsgemäße Doppelblech entlang der Schnittlinie A-A in Figur 2;
Figur 4 eine vergrößerte Detailansicht eines Ausschnitts B aus dem Doppelblech gemäß der Darstellung von Figur 3.

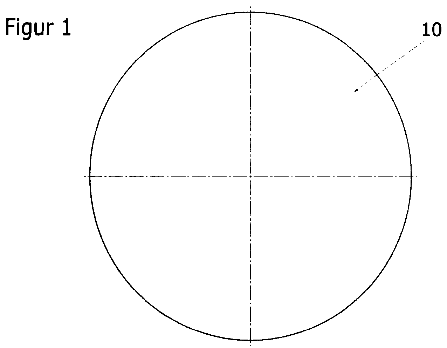

Figur 1 zeigt ein scheibenförmiges Blechrohlings für ein Schwungrad gemäß der Erfindung vor der Verformung und weiteren Bearbeitung.

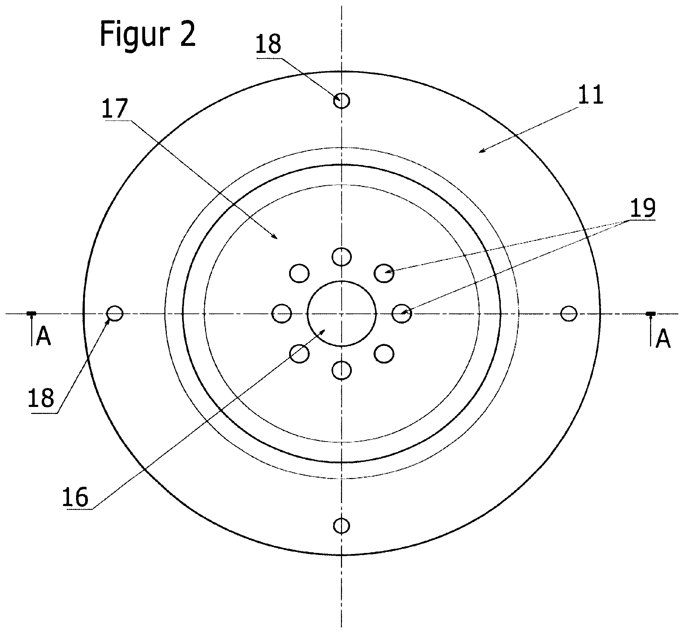

Es wird nachfolgend auf die Figur 2 Bezug genommen. Diese zeigt perspektivisch ein insgesamt mit dem Bezugszeichen 10 bezeichnetes Doppelblech für ein Schwungrad, welches nach dem erfindungsgemäßen Verfahren hergestellt wurde. Im Prinzip hat ein solches Doppelblech 10 die Form eines scheibenförmigen Grundkörpers aus Blech, der hierin auch als Mitnehmerscheibe bezeichnet wird. An dem äußeren Umfang dieses scheibenförmigen Grundkörpers wird später beispielsweise ringsum ein hier nicht dargestellter Zahnkranz befestigt, beispielsweise angeschweißt.

Der scheibenförmige Grundkörper 10 weist in verschiedenen Bereichen meist über den Umfang verteilt Lochungen auf. Beispielsweise können solche Lochungen mit kleineren Löchern 18 im Bereich eines äußeren ringförmigen flachen Flansches 11 der Mitnehmerscheibe vorhanden sind, jeweils mit Abstand voneinander über den Umfang der Mitnehmerscheibe 10 verteilt. Neben diesen kleineren Löchern 18 können beispielsweise noch an anderen Stellen Löcher 19 vorhanden sein, zum Beispiel in einem radial inneren Bereich 17 der Mitnehmerscheibe. Auf das Lochmuster, die Form und Anzahl der diversen Löcher 18, 19 kommt es im Rahmen der vorliegenden Erfindung nicht an, da es vielmehr prinzipiell um die Art der Herstellung und den Aufbau des erfindungsgemäßen Schwungrads geht.

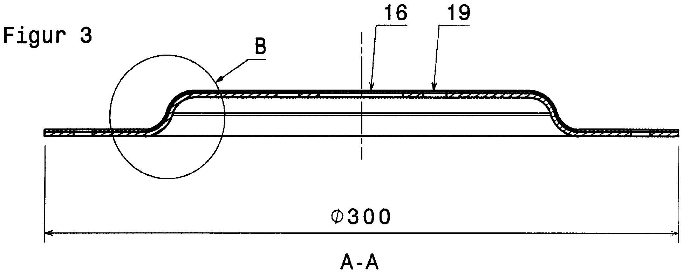

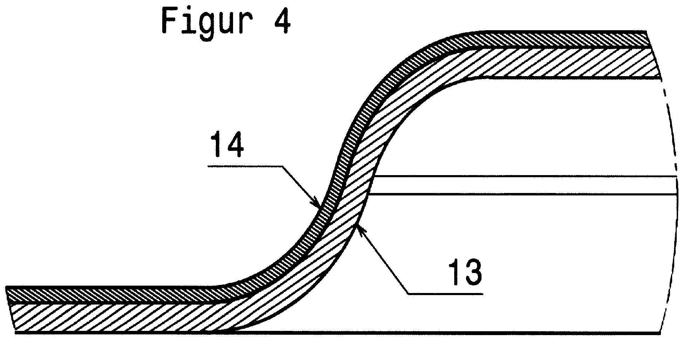

Der vorgenannte zentrische Bereich 17 des Schwungrads ist wie man aus Figur 3 erkennt durch ein Umformverfahren aus der Ebene des scheibenförmigen Grundkörpers 10 heraus verformt, so dass dieser zentrische Bereich 17 gegenüber den sich radial nach außen hin anschließenden Bereichen erhaben ist. Dieser zentrische Bereich weist ein mittiges Loch 16 auf, wobei ein Lochkranz mit mehreren der kleineren Löcher 19 vorhanden ist, die das mittige Loch 16 ringsum konzentrisch umgeben. Diese konstruktiven Details betreffend den Aufbau des Schwungrads sind jedoch für die vorliegende Erfindung nicht entscheidend, da es hier vielmehr auf die Art der Herstellung des scheibenförmigen Grundkörpers 10 ankommt, der wie man aus den Figuren 3 und 4 erkennen kann, ein sandwichartiges Bauteil aus mindestens zwei Blechlagen ist.

Dieser sandwichartige Aufbau des scheibenförmigen Grundkörpers wird nachfolgend unter Bezugnahme auf die Schnittansichten gemäß den Figuren 3 und 4 näher erläutert. Wie man dort gut erkennen kann, besteht der scheibenförmige Grundkörper 10 aus einem Doppelblech, d.h. es sind zwei in den meisten Bereichen zueinander parallel verlaufende Blechlagen 13, 14 vorhanden, die übereinander und im Prinzip aneinander anliegen. Wie man aus der Figur 4 erkennt, ist die erste, hier unten liegende Blechlage in einer größeren Materialstärke von mehr als einem mm, beispielsweise in einer Materialstärke von 1,8 mm ausgeführt. Im Vergleich dazu ist die Blechstärke der zweiten Blechlage 14, welche hier die obere Blechlage bildet, geringer und liegt zum Beispiel in einem Bereich von weniger als 1 mm, beispielsweise beträgt hier die Blechstärke der zweiten Blechlage 14 etwa 0,8 mm, was weniger als die Hälfte der Blechstärke der ersten Blechlage 13 ist.

Weiterhin bestehen die beiden Blechlagen 13, 14 in diesem Beispiel aus unterschiedlichen Stahlwerkstoffen, wobei die erste untere Blechlage 13 in dem Beispiel aus einem weicheren Stahlwerkstoff besteht, beispielsweise aus dem Werkstoff S355MC, während die zweite obere Blechlage 14 aus einem härteren Stahlwerkstoff besteht, beispielsweise aus dem Werkstoff S700MC, welcher im Vergleich zu dem ersten Stahlwerkstoff eine höhere Mindeststreckgrenze von 700 N/mm2 aufweist, während der erste weichere Stahlwerkstoff nur eine Mindeststreckgrenze von 355 N/mm2 aufweist.

In einem Fügeprozess unter Druck werden diese beiden übereinander liegenden Blechlagen 13, 14 dauerhaft fest miteinander zu einem Sandwichbauteil verbunden. Versuche im Hinblick auf die geräuschdämpfenden Eigenschaften eines solchen Schwungrads im Betrieb bei einem Anlassvorgang haben gezeigt, dass ein solches sandwichartiges Doppelblech bei Einwirkung von Kräften weicher reagiert als ein einzelnes Blech. Außenseitig über den Zahnkranz ist das Schwungrad im Betrieb mit dem Getriebe verbunden. In den Zahnkranz greift beispielsweise ein hier nicht dargestelltes Ritzel ein, wenn das Schwungrad in einer Start/Stopp-Vorrichtung eines Anlassers verwendet wird. Im zentrischen Bereich 17 wird die Mitnehmerscheibe des Schwungrads mit der Kurbelwelle des Motors verbunden (diese an sich bekannten Motoren/-Getriebeelemente sind in der vorliegenden Anmeldung nicht dargestellt.)

Bei einer Verformung eines erfindungsgemäßen Schwungrads von beispielsweise 1 mm in axialer Richtung muss nur eine Kraft von ca. 1080 N aufgebracht werden, wohingegen diese Kraft bei einem herkömmlichen Schwungrad nach dem Stand der Technik etwa doppelt so groß ist. Dadurch erhält man in wichtigen Bauteilen wie zum Beispiel in den Lagern einen erheblich geringeren Verschleiß und die Belastung der Kurbelwelle ist wesentlich geringer.

Durch Einsparung einer viskoelastischen Schicht wird gegenüber herkömmlichen Lösungen Gewicht eingespart, das Schwungrad wird leichter und hat ein geringeres Massenträgheitsmoment. Die geräuschdämpfende Wirkung des Doppelblechs ist gleichwohl sehr gut. Anstelle von zwei aufeinander liegenden Blechlagen können auch drei oder mehrere Blechlagen verwendet werden, wenn es die entsprechende Anwendung erfordert.

Die Verbindung des Doppelblechs mit den beiden Blechlagen 13, 14 am äußeren Umfang mit dem Zahnkranz eines Schwungsrads kann beispielsweise wie über eine Schweißnaht erfolgen. In ihrem jeweiligen äußeren Randbereich können die beiden Blechlagen 13, 14 jeweils unterschiedlich geformt sei.

Die beiden Blechlagen 13, 14 können auch beispielsweise zusätzlich durch Durchsetzfügen (Clinchen) so verformt werden, dass sich eine bessere gegenseitige Fixierung ergibt. Diese Art der Verbindung erleichtert beispielsweise den Transport der Bauteile bis zum Zusammenbau durch Schweißen.

Gemäß einem bevorzugten Verfahren kann die Herstellung eines erfindungsgemäßen Dämpfungsblechteils sowie eines Schwungrads beispielsweise mit der folgenden Abfolge von Verfahrensschritten erfolgen:
Die erste Blechlage 13 und die zweite Blechlage 14 werden gemeinsam in eine Presse eingelegt und werden in dieser gemeinsam entsprechend der gewünschten Form der herzustellenden Mitnehmerscheibe in einem oder mehreren Schritten umgeformt;
wenn dabei eine der Blechlagen in ihrem radial äußeren Bereich eine Aufkantung oder Umbiegung erhält-was nicht unbedingt erforderlich ist,-- dann hat dies den Vorteil, dass das zu einer Aussteifung und einer Glättung der Blechlage in der Ebene der Mitnehmerscheibe führt;
die beiden Blechlagen werden gegenseitig fixiert durch Durchsetzfügen (Clinchen), dieser Schritt ist optional und nicht unbedingt notwendig.);
die beiden Blechlagen werden dann gemeinsam gelocht, entsprechend dem erforderlichen Lochmuster für die herzustellende Mitnehmerscheibe;
die beiden Blechlagen werden dann vorzugsweise in ihrem radial äußeren Bereich sowohl miteinander als auch mit einem die Blechlagen radial außenseitig umgebenden Zahnkranz verschweißt;
im radial inneren Bereich wird die so erhaltene Mitnehmerscheibe mit Zahnkranz, die somit ein Schwungrad bildet, durch eine Verschraubung mit einer Kurbelwelle verbunden.

### Bezugszeichenliste

- 10: scheibenförmiger Grundkörper, Mitnehmerscheibe
- 11: äußerer ringförmiger Bereich
- 13: erste (untere) Blechlage
- 14: zweite (obere) Blechlage
- 16: mittiges Loch
- 17: erhabener zentrischer Bereich
- 18: kleinere Löcher außen
- 19: Löcher ringsum mittige Loch

## Patentansprüche

1. Verfahren zur Herstellung eines Schwungrads, bei dem man ein Dämpfungsblechteil herstellt, indem man wenigstens ein erstes für das Schwungrad vorgesehenes metallisches Blechelement (13) mit wenigstens einer zweiten parallelen Blechlage (14) aufeinanderliegend durch einen Fügevorgang zu einer scheibenförmigen baulichen Einheit verbindet, wobei man wenigstens zwei Blechlagen (13, 14) mit unterschiedlichen Materialstärken miteinander verbindet, wobei die erste Blechlage (13) eine größere Blechstärke aufweist als die zweite Blechlage (14) und wobei man wenigstens zwei Blechlagen (13, 14) mit zumindest im Ausgangszustand vor dem Fügevorgang unterschiedlichen Umformkonturen miteinander verbindet, **dadurch gekennzeichnet, dass** die wenigstens zwei Blechlagen (13,14) aus unterschiedlichen Werkstoffen bestehen und die erste Blechlage (13) aus einem weicheren Stahlwerkstoff besteht als die zweite Blechlage (14).

2. Verfahren nach Anspruch 1, **dadurch gekennzeichnet, dass** die erste Blechlage (13) eine Blechstärke von mehr als 1 mm aufweist, vorzugsweise eine Blechstärke von mehr als 1,5 mm.

3. Verfahren nach einem der Ansprüche 1 und 2, **dadurch gekennzeichnet, dass** die zweite Blechlage (14) eine Blechstärke von weniger als 1 mm aufweist.

4. Verfahren nach einem der Ansprüche 1 bis 3, **dadurch gekennzeichnet, dass** die erste Blechlage (13) aus einem thermomechanisch gewalzten kohlenstoffarmen hochfesten und zum Kaltumformen geeigneten Stahlwerkstoff mit einer Mindeststreckgrenze von 355 N/mm² besteht.

5. Verfahren nach einem der Ansprüche 1 bis 4, **dadurch gekennzeichnet, dass** die zweite Blechlage (14) aus einem thermomechanisch gewalzten kohlenstoffarmen hochfesten und zum Kaltumformen geeigneten Stahlwerkstoff mit einer Mindeststreckgrenze von 700 N/mm² besteht.

6. Verfahren nach einem der Ansprüche 1 bis 5, **dadurch gekennzeichnet, dass** eine Mehrzahl von Blechlagen (13, 14) umfassend jeweils Blechlagenpaarungen aus jeweils zwei Blechlagen (13, 14) mit unterschiedlicher Materialstärke und/oder jeweils unterschiedlichen Stahlwerkstoffen miteinander gefügt werden.

7. Verfahren nach einem der Ansprüche 1 bis 6, **dadurch gekennzeichnet, dass** man wenigstens zwei Blechlagen (13, 14) mit zumindest im Ausgangszustand vor dem Fügevorgang unterschiedlichen Beschneidekonturen miteinander verbindet.

8. Verfahren nach einem der Ansprüche 1 bis 7, **dadurch gekennzeichnet, dass** man wenigstens zwei Blechlagen (13, 14) miteinander verbindet, welche vor dem Fügevorgang eine unterschiedliche Wärmebehandlung erhalten haben.

9. Verfahren nach einem der Ansprüche 1 bis 8, **dadurch gekennzeichnet, dass** man das Sandwichbauteil umfassend das erste Blechelement (13), die zweite Blechlage (14) sowie gegebenenfalls weitere Blechlagen mindestens teilweise aus der Hauptebene des scheibenförmigen Sandwichbauteils heraus entsprechend der Form des Schwungrads (10) verformt sowie an diesem gegebenenfalls Lochungen (18, 19) oder Ausstanzungen vornimmt.

10. Verfahren nach einem der Ansprüche 1 bis 9, **dadurch gekennzeichnet, dass** nur eine Blechlage (13) des scheibenförmigen Sandwichbauteils in einem radial äußeren Randbereich eine Aufkantung oder Umbiegung erhält, die die zweite oder weitere Blechlagen (14) nicht aufweisen.

11. Verfahren nach einem der Ansprüche 1 bis 10, **dadurch gekennzeichnet, dass** der Fügevorgang der Blechlagen (13, 14) eine zusätzliche gegenseitige Fixierung der Blechlagen in radialer Richtung durch Einclipsen umfasst.

12. Verfahren nach einem der Ansprüche 1 bis 11, **dadurch gekennzeichnet, dass** die aufeinanderliegenden Blechlagen (13, 14) des scheibenförmigen Sandwichbauteils keine gegenseitige Fixierung aneinander aufweisen und in radialer Richtung und/oder in axialer Richtung im Mikrobereich relative Lageänderungen der Blechlagen zueinander möglich sind.

13. Für einen Anlasser eines Kraftfahrzeugs vorgesehenes Schwungrad, insbesondere für ein Kraftfahrzeug mit Start/Stopp-Automatik, **dadurch gekennzeichnet, dass** dieses nach einem Verfahren gemäß einem der Ansprüche 1 bis 12 hergestellt ist.

## Claims

1. Method for producing a flywheel, in which a damping sheet metal part is produced, in that at least one first sheet metal element (13) provided for the flywheel is connected to at least one second parallel sheet metal layer (14), one lying on top of the other, by means of a joining process so as to form a disc-shaped structural unit, wherein at least two sheet metal layers (13, 14) having different material thicknesses are connected to one another, wherein the first sheet metal layer (13) has a greater sheet metal thickness than the second sheet metal layer (14) and wherein at least two sheet metal layers (13, 14) having different forming contours at least in the initial state prior to the joining process are connected to one another, **characterised in that** the at least two sheet metal layers (13, 14) consist of different materials and the first sheet metal layer (13) consists of a softer steel material than the second sheet metal layer (14).

2. Method according to claim 1, **characterised in that** the first sheet metal layer (13) has a sheet metal thickness of more than 1 mm, preferably a sheet metal thickness of more than 1.5 mm.

3. Method according to any of claims 1 and 2, **characterised in that** the second sheet metal layer (14) has a sheet metal thickness of less than 1 mm.

4. Method according to any of claims 1 to 3, **characterised in that** the first sheet metal layer (13) consists of a thermomechanically rolled, low-carbon, high-strength steel material that is suitable for cold forming and has a minimum yield strength of 355 N/mm².

5. Method according to any of claims 1 to 4, **characterised in that** the second sheet metal layer (14) consists of a thermomechanically rolled, low-carbon, high-strength steel material that is suitable for cold forming and has a minimum yield strength of 700 N/mm².

6. Method according to any of claims 1 to 5, **characterised in that** a plurality of sheet metal layers (13, 14) each comprising sheet metal layer pairings each consisting of two sheet metal layers (13, 14) having a different material thickness and/or each having different steel materials are joined to one another.

7. Method according to any of claims 1 to 6, **characterised in that** at least two sheet metal layers (13, 14) having different cutting contours at least in the initial state prior to the joining process are connected to one another.

8. Method according to any of claims 1 to 7, **characterised in that** at least two sheet metal layers (13, 14) that have been heat-treated differently prior to the joining process are connected to one another.

9. Method according to any of claims 1 to 8, **characterised in that** the sandwich component comprising the first sheet metal element (13), the second sheet metal layer (14) and, if applicable, further sheet metal layers is deformed at least partially out of the main plane of the disc-shaped sandwich component in accordance with the shape of the flywheel (10) and **in that**, if applicable, perforations (18, 19) or punched holes are made therein.

10. Method according to any of claims 1 to 9, **characterised in that** only one sheet metal layer (13) of the disc-shaped sandwich component is folded up or bent in a radially outer edge region, which is not featured by the second or further sheet metal layers (14).

11. Method according to any of claims 1 to 10, **characterised in that** the joining process for the sheet metal layers (13, 14) additionally comprises mutually securing the sheet metal layers in the radial direction by clipping them in.

12. Method according to any of claims 1 to 11, **characterised in that** the sheet metal layers (13, 14) of the disc-shaped sandwich component lying one on top of the other are not mutually secured to one another and position changes of the sheet metal layers relative to one another are possible in the radial direction and/or in the axial direction in the micro range.

13. Flywheel provided for a starter motor of a motor vehicle, in particular for a motor vehicle having an automatic start/stop system, **characterised in that** said flywheel is produced according to a method according to any of claims 1 to 12.

## Revendications

1. Procédé de fabrication d'un volant d'inertie dans lequel on fabrique une pièce de tôle d'amortissement en assemblant au moins un premier élément en tôle (13) métallique prévu pour le volant d'inertie avec au moins une deuxième couche de tôle (14) parallèle superposée, par un processus d'assemblage, pour former une unité structurelle en forme de disque, dans lequel au moins deux couches de tôle (13, 14) d'épaisseurs différentes sont assemblées entre elles, dans lequel la première couche de tôle (13) présente une épaisseur de tôle supérieure à celle de la deuxième couche de tôle (14), et dans lequel au moins deux couches de tôle (13, 14) présentant, au moins dans l'état initial avant le processus d'assemblage, des contours de formage différents, sont assemblées entre elles, **caractérisé en ce que** les au moins deux couches de tôle (13, 14) sont constituées de matériaux différents, et la première couche de tôle (13) est constituée d'un matériau en acier plus doux que la deuxième couche de tôle (14).

2. Procédé selon la revendication 1, **caractérisé en ce que** la première couche de tôle (13) présente une épaisseur de tôle supérieure à 1 mm, de préférence une épaisseur de tôle supérieure à 1,5 mm.

3. Procédé selon l'une des revendications 1 et 2, **caractérisé en ce que** la deuxième couche de tôle (14) présente une épaisseur de tôle inférieure à 1 mm.

4. Procédé selon l'une des revendications 1 à 3, **caractérisé en ce que** la première couche de tôle (13) est constituée d'un matériau en acier thermomécaniquement laminé à faible teneur en carbone et à haute résistance, et adapté au formage à froid avec une limite d'élasticité minimale de 355 N/mm².

5. Procédé selon l'une des revendications 1 à 4, **caractérisé en ce que** la deuxième couche de tôle (14) est constituée d'un matériau en acier thermomécaniquement laminé à faible teneur en carbone et à haute résistance, et adapté au formage à froid avec une limite d'élasticité minimale de 700 N/mm².

6. Procédé selon l'une des revendications 1 à 5, **caractérisé en ce qu'**un certain nombre de couches de tôle (13, 14) comprenant respectivement des paires de couches de tôle, constituées respectivement de deux couches de tôle (13, 14) d'épaisseurs différentes et/ou respectivement de matériaux en acier différents, sont assemblées entre elles.

7. Procédé selon l'une quelconque des revendications 1 à 6, **caractérisé en ce qu'**au moins deux couches de tôle (13, 14), présentant des contours de coupe différents au moins dans l'état initial avant le processus d'assemblage, sont assemblées entre elles.

8. Procédé selon l'une des revendications 1 à 7, **caractérisé en ce qu'**au moins deux couches de tôle (13, 14), qui ont reçu un traitement thermique différent avant le processus d'assemblage, sont assemblées entre elles.

9. Procédé selon l'une des revendications 1 à 8, **caractérisé en ce que** l'on déforme au moins partiellement le composant sandwich comprenant le premier élément de tôle (13), la deuxième couche de tôle (14) ainsi que, le cas échéant, d'autres couches de tôle hors du plan principal du composant sandwich en forme de disque, en fonction de la forme du volant d'inertie (10), et le cas échéant, des perforations (18, 19) ou des découpes sont réalisées sur celui-ci.

10. Procédé selon l'une des revendications 1 à 9, **caractérisé en ce qu'**une seule couche de tôle (13) du composant sandwich en forme de disque reçoit, dans une zone de bordure radialement externe, un rebord ou un pliage, que la deuxième couche de tôle (14) ou d'autres couches de tôle ne présentent pas.

11. Procédé selon l'une des revendications 1 à 10, **caractérisé en ce que** le processus d'assemblage des couches de tôle (13, 14) comprend une fixation mutuelle supplémentaire des couches de tôle dans le sens radial par clipsage.

12. Procédé selon l'une des revendications 1 à 11, **caractérisé en ce que** les couches de tôles (13, 14) superposées du composant sandwich en forme de disque ne présentent pas de fixation mutuelle les unes aux autres, et **en ce que** des variations de position relatives des couches de tôles les unes par rapport aux autres sont possibles dans la direction radiale et/ou dans la direction axiale, à l'échelle microscopique.

13. Volant d'inertie destiné à un démarreur de véhicule à moteur, en particulier pour un véhicule à moteur équipé d'un système automatique de démarrage/arrêt, **caractérisé en ce qu'**il est fabriqué selon un procédé conforme à l'une des revendications 1 à 12.
